# EUROPÄISCHE PATENTSCHRIFT

(11) **EP 1 560 349 B1**
(45) Veröffentlichungstag und Bekanntmachung des Hinweises auf die Patenterteilung: **11.07.2007**
(21) Anmeldenummer: 04001703.0
(22) Anmeldetag: 27.01.2004
(51) Int. Cl.: H04B 3/48

(54) **Vorrichtung und Verfahren zur Überwachung von Hochfrequenzkabelstrecken**
Device and method for supervising high frequency cables
Dispositif et procédé pour surveiller des cables haute fréquence

(43) Veröffentlichungstag der Anmeldung: 03.08.2005
(73) Patentinhaber: Kaitec Ingenieurleistungen für Nachrichten- und Übertragungstechnik GmbH, 63846 Laufach (DE)
(72) Erfinder: Kaiser, Stefan, 63846 Laufach (DE)
(74) Vertreter: Thürer, Andreas

(56) Entgegenhaltungen:
- WO-A-01/33823
- FR-A- 2 346 726
- US-A- 4 271 478
- US-A- 4 491 968

## Beschreibung

Die Erfindung betrifft eine Vorrichtung zur Überwachung von Hochfrequenzkabelstrecken, sowie ein Verfahren zur Überwachung von Hochfrequenzkabelstrecken.

Die Überwachung von elektrischen Betriebsmitteln, wie beispielsweise Hochfrequenzkabeln, nimmt in ihrer Bedeutung immer stärker zu, da in Zukunft eine noch stärkere Belastung der Betriebsmittel erwartet wird und durch die Überwachung (Monitoring) eine Verbesserung der Kontrolle erreicht werden kann. Hochfrequenzkabel, wie sie beispielsweise in U-Bahntunneln aufgrund ihrer Abstrahlung zur Aufrechterhaltung der Funkverbindung eingesetzt werden, bedürfen einer schnellen und zuverlässigen Überwachung zur Gewährleistung einer ausreichenden Betriebssicherheit. Hochfrequenzkabel müssen auf Unterbrechung oder Dämpfungsveränderungen untersucht werden.

Bekannt ist ein Verfahren zur Messung der Vorlauf-/Rücklaufleistung eines Nutzsignals bei angeschlossenem Hochfrequenzkabel. Übersteigt die Rücklaufleistung eine vorbestimmte Referenzgröße wird eine Störmeldung ausgegeben.

Nachteilig ist, dass eine Beurteilung der Hochfrequenzkabel nur bis zu einer begrenzten Länge in Abhängigkeit vom Kabeltyp möglich ist, da die Leitungsdämpfung in Abhängigkeit von der Kabellänge den Betrag der rücklaufenden Leistung bestimmt.

Aufgabe der vorliegenden Erfindung ist es, eine Vorrichtung zur Überwachung von Hochfrequenzkabelstrecken bereitzustellen, die es unter Vermeidung der Nachteile des Stands der Technik ermöglicht, schnelle und sichere Messungen von Hochfrequenzkabeln beliebiger Länge durchzuführen.

Im Dokument US-A-4 271 478 wird das Senden von Prüfdaten in einer Signalfolge, wobei Signale unterschiedlicher Frequenzen in festgelegten Zeitdifferenzen voneinander als Signalfolge ausgesendet werden offenbart.

US-A-4 491 968 offenbart ein Messgerät zum Empfang einer Messstrahlung, die von einem Übertragungsgerät für den Hochfrequenzbereich ausgestrahlt wird.

Die Aufgabe wird gelöst durch eine Vorrichtung zur Überwachung von Hochfrequenzkabelstrecken mit abstrahlenden Hochfrequenzkabeln zur Aufrechterhaltung eines Funknetzes auf zumindest teilweise Unterbrechung oder Dämpfungsveränderung, mit einem Prüfsender und einem Prüfempfänger, wobei von dem Prüfsender ein Prüfsignal mit einer vorgegebenen Prüfsendefrequenz und Prüfsendefeldstärke in die Hochfrequenzkabelstrecke einzuspeisen ist und durch den Prüfempfänger auszulesen ist, und der Prüfsender an einem und der Prüfempfänger an dem anderen Ende der zu vermessenden Kabellänge der Hochfrequenzkabelstrecke beabstandet in Durchleitungsanordnung an die Hochfrequenzkabelstrecke anzukoppeln sind, und die Prüfempfangsdaten des von dem Prüfempfänger empfangenen Prüfsignals, insbesondere die Prüfempfangsfeldstärke, mit vorbestimmten Referenzwerten zu vergleichen sind, wobei nach Maßgabe eines Vergleichs des Prüfsignals mit einem oder mehreren Referenzwerten ein Kabelfehler bzw. Fehlerfreiheit der Hochfrequenzkabelstrecke detektierbar ist.

Geprüft werden mit der vorgeschlagenen Vorrichtung Hochfrequenzkabelstrecken, die jeweils eine Teilstrecke eines Netzwerks sind, insbesondere auch leitend aneinandergekoppelte Kabelteilstrecken werden als eine Kabelstrecke im Sinne der Erfindung angesehen, wobei ein Prüfsender an einer ersten Kabelteilstrecke und ein Prüfempfänger an einer zweiten, mit der ersten leitend verbundenen Kabelteilstrecke angeordnet sein kann.

Der Prüfsender sendet ein Prüfsignal in Durchleitungsanordnung in die Hochfrequenzkabeistrecke aus. Dieses Aussenden kann beispielsweise kontinuierlich oder auch diskontinuierlich erfolgen. Das Prüfsignal wird durch den Prüfempfänger empfangen. Dabei kann eine größere Anzahl Hochfrequenzkabelstrecken parallel angekoppelt und durch den Prüfempfänger die empfangenen Signale nacheinander ausgewertet werden.

Die Durchleitungsanordnung wird im wesentlichen durch die Anordnung der Vorrichtungen mit Prüfsender und Prüfempfänger festgelegt. Der Abstand zwischen benachbartem Prüfsender und Prüfempfänger kann sehr groß gewählt werden entsprechend den Anforderungen bei langen Hochfrequenzkabelstrecken beispielsweise in einem Tunnelsystem.

Das Prüfsignal kann auf verschiedenen Frequenzen kontinuierlich oder diskontinuierlich ausgesendet werden. Diese Frequenzen können angepasst an unterschiedliche Anforderungen ausgewählt werden, beispielsweise optimiert angepasst an die Dämpfung durch das Kabelmaterial, den Kabelaufbau, die Kabelgeometrie, insbesondere die Länge.

Die Prüfempfangsdaten können so ausgewählt werden, dass sie charakteristisch für die jeweilige Kabelstrecke sind, beispielsweise die Prüfempfangsfeldstärke. Diese werden dann mit gespeicherten, auf das zu prüfende Hochfrequenzkabel abgestimmten Referenzwerten verglichen. Diese Referenzwerte können aber auch allgemeingültig, beispielsweise bis zu einer maximalen Kabellänge gültig sein.

Die erfindungsgemäße Vorrichtung zur Überwachung misst somit nicht ein Verhältnis zwischen Vorlauf- und Rücklaufleistung eines eingespeisten Prüfsignals, sondern es sendet ein eigenes Prüfsignal auf die Hochfrequenzkabelstrecke und misst dieses wiederum am anderen Ende der Hochfrequenzkabelstrecke mit einem Prüfempfänger, vorzugsweise angeordnet in einem zweiten Prüfmodul zur Kabelüberwachung mit einem weiteren Prüfsender und einem Prüfempfänger. Damit können Hochfrequenzkabel mit Längen von mehreren Kilometern in die Überwachung einbezogen werden. Ein sehr wichtiger Anwendungsbereich sind somit vor allem Tunnel, insbesondere U-Bahnnetze, wo abstrahlende Hochfrequenzkabel zur Aufrechterhaltung eines Funknetzes dienen.

Vorteilhaft ist es, wenn ein Fehler zu registrieren ist, wenn die Prüfempfangsfeldstärke einen vorgegebenen Mindestwert unterschreitet. Hierdurch wird angezeigt, dass die Dämpfung, der Leitungswiderstand oder ähnliches sehr groß ist, die Kabelstrecke somit gestört, eventuell sogar unterbrochen ist. Der vorgegebene Mindestwert der Prüfempfangsfeldstärke ist vorteilhaft im Verhältnis zur Prüfsendefeldstärke anzusetzen.

Wenn ein Fehler zu registrieren ist, wenn die Prüfempfangsfeldstärke einen Maximalwert überschreitet, werden beispielsweise Fehler durch Einstrahlung erkannt. Eine einfache Gewährleistung der Einhaltung eines Mindestwertes und eines Maximalwertes kann über die Programmierung einer Hysterese geschehen, innerhalb der sich der empfangene Prüfwert bewegen sollte.

Vorteilhaft ist es, wenn der Empfang/das Senden des Prüfsignals über jeweils einen an eine Hochfrequenzkabelstrecke anzukoppelnden Kabelkontakt vorzunehmen ist. Das Prüfen erfolgt somit in Form einer anzukoppelnden Vorrichtung, es ist unabhängig von den Nutzsignalsendern vornehmbar, insbesondere kann dadurch unabhängig von anderen Kontakten jeweils ausschließlich die Fehlerfreiheit der Hochfrequenzkabelstrecke überprüft werden.

Ein breiter, möglicher Prüffrequenzbreich liegt vor, wenn die Prüfsendefrequenz im Frequenzbereich zwischen etwa 1MHz bis 1GHz liegt. Abgestimmt auf die jeweils vorliegenden Bedingungen können andere Frequenzen eingestellt werden, man ist nicht auf die Nutzfrequenz, mit der die Nutzsignale über das Hochfrequenzkabel gesendet werden, eingeschränkt. Je niedriger die ausgewählte Prüffrequenz desto geringer ist die Dämpfung der Signale und desto besser ist die Längsübertragung. Es können längere Kabeistrecken ausgemessen werden.

Wenn die Prüffrequenz im Frequenzbereich zwischen 40 MHz bis 71 MHz liegt, liegt sie in einem Bereich freier Frequenzen und es wird in der Regel kein Senden im Nutzfrequenzbereich gestört.

Vorteilhaft ist es, wenn mehrere Prüfsender/Prüfempfänger parallel zu betreiben sind und jeweils auf einem anderen Frequenzbereich senden/empfangen. Die gesendeten Prüfsignale der verschiedenen Prüfsender können sich nicht gegenseitig stören, sind gut zu empfangen und auszuwerten.

Prüfsignale können einfach und sicher in viele Hochfrequenzkabelstrecken eingespeist werden, wenn Koppelmatrizen zum Einspeisen und/oder Empfangen des Prüfsignals zur Überwachung von mehreren, insbesondere vier, Hochfrequenzkabelstrecken gleichzeitig angeordnet sind. Zum Empfang können die Hochfrequenzkabel schnell nacheinander einzeln angesprochen werden oder bei dem Vorliegen verschiedener Frequenzen auch einzeln herausgefiltert werden. Eine Kopplung an vier Hochfrequenzkabeln ist besonders vorteilhaft bei einer Tunnelkreuzung aus Einfachröhren oder einer Doppeiröhre, die in zwei Richtungen von einer Station wegführt., wobei jeweils ein Hochfrequenzkabel 1 in einer Röhre angebracht ist.

Vorteilhaft ist es, wenn Kontakte der Koppelmatrizen zum Empfangen über eine Steuereinheit anzusteuern sind, so dass, bevorzugt mittels Relais, nur eine der Hochfrequenzkabelstrecken zur selben Zeit an den Prüfempfänger angeschlossen ist und die hierdurch in den Prüfempfänger eingeleiteten Prüfsignale auszuwerten sind. Auf diese Weise muss nur eine Steuereinheit und eine vorgeordnete Schaltungsanordnung vorliegen und es kann eine schnelle Umstellung auf beliebig viele, nacheinander abzufragende Hochfrequenzkabelstrecken erfolgen. Durch eine Widerstandsentkopplung über Masse mit einem hohen Entkopplungsgrad der zu einem jeweiligen Zeitpunkt nicht abgefragten Hochfrequenzkabelstrecken wird eine Störung oder Verfälschung der Messwerte ausgeschlossen.

Weiter vorteilhaft ist es, wenn ein Prüfsender kontinuierlich Prüfssignale mit einer vorbestimmten Prüffrequenz aussendet. Die Verwendung jeweils einer einzigen Prüffrequenz ermöglicht eine eindeutige Zuordnung eines Prüfempfängers zu dem Prüfsender. Da die Prüffrequenzen jeweils eindeutig zugeordnet werden können, können die Prüfsignale auf einer Prüffrequenz jeweils mit einer großen zeitlichen Dichte, insbesondere also kontinuierlich ausgestrahlt werden.

Ein sehr großes Hochfrequenzkabeinetzwerk kann überprüft werden, wenn insbesondere bis zu 32 Prüfsender in einem Prüffrequenzbereich mit jeweils einem Prüffrequenzabstand von etwa 1 MHz eingerichtet sind. Jeweils einem Prüfsender ist eine Prüffrequenz zugeordnet. Ein Prüfsender kann nahezu unbegrenzt viele Prüfempfänger in unterschiedlichen Hochfrequenzkabelstrecken auf derselben Prüffrequenz ansprechen, wodurch eine hohe Anzahl möglicher Prüfsender-/Prüfempfängerpaare entsteht. Durch den Prüffrequenzabstand 1 MHz ist sichergestellt, dass eine gute und einfache Unterscheidung der Prüffrequenzen möglich ist.

Es ist sichergestellt, dass der Prüffrequenzbereich nicht durch andere, insbesondere öffentliche Sendeeinrichtungen belegt ist, wenn der Prüfsender mit einer Prüffrequenz von etwa 40 MHz - 41 MHz, vorzugsweise 40,68 MHz, sendet. Dies würde sowohl zu Störungen der Nutzsignale als auch der Prüfsignale führen.

Um eine Überlagerung der Signale und eine Störung zu vermeiden, sind Prüfsignale vorteilhaft zu zufälligen Zeitpunkten auszusenden, vorzugsweise sofern kein weiteres Prüfsignal aus einem anderen Prüfsender mit derselben Prüffrequenz zu empfangen ist. wird verhindert, dass Signale derselben Frequenz gleichzeitig an einem Prüfmodul, aufgebaut aus Sender und Empfänger ankommen und abgestrahlt werden.

Vorteilhaft ist es, wenn ein Prüfsignal eine modulierte ID-Kennung aufweist, wobei beim Prüfempfänger zunächst die ID-Kennung des Prüfsignals mit gespeicherten ID-Kennungen zu vergleichen ist und bei Übereinstimmung der ID-Kennungen ein Vergleich der Feldstärkewerte erfolgt. Die Aufmodulation einer ID-Kennung auf ein Prüfsignal ermöglicht eine eindeutige Identifizierung, ob es sich um ein Prüfsignal handelt, das einem bestimmten Sender zugeordnet werden kann. Nach einem positiven Vergleich der ID-Kennung mit gespeicherten ID-Kennungen wird es möglich, die Eigenschaften des Signals zu ermitteln. Durch die Zuordnung/Identifizierung der ID-Kennunng kann somit beispielsweise die Entfernung von Prüfsender des empfangenen Prüfsignals zum Prüfempfänger oder die Sendefeldstärke und weiteres festgestellt werden.

Wenn bis zu 255 Prüfsender, die jeweils einer anderen ID-Kennung entsprechen, im gleichen Prüffrequenzbereich zu verwenden sind, ist ein sehr großes Hochfrequenzkabelnetz zu überwachen. Vorteilhaft lassen sich 255 verschiedene ID-Kennungen zum Senden mit einfachen Jumpern erzeugen. Ein Prüfsender ist jeweils einer ID-Kennung zugeordnet. Der Prüfsender kann eine beliebige Anzahl Prüfempfänger ansprechen, jeweils beispielsweise durch eine auf die ID-Kennung abgestimmte Programmierung einer Prüfempfängersoftware, so dass somit eine sehr hohe Zahl Prüfsender-Prüfempfängerpaaren möglich sind, die beispielsweise bei einer anderen Erzeugung der ID-Kennungen und einer höheren Zahl unterscheidlicher ID-Kennungen noch erhöht werden kann.

Eine für den praktischen Einsatz sehr schnell und sicher einzusetzende Vorrichtung liegt vor, wenn ein Prüfsender und ein Prüfempfänger jeweils in einem Prüfmodul integriert sind. Die zusammengesetzten Prüfsender/Prüfempfänger werden vorteilhaft von der gleichen Steuereinheit gesteuert. Dabei sind die Prüfsender und Prüfempfänger eines Prüfmoduls jeweils einem weitere Prüfempfänger/Prüfsender beabstandet angeordneter Prüfmodule zugeordnet, von denen Prüfsignale gesendet und empfangen werden.

Eine schnelle Programmierung, Änderung und Einstellung der Referenzwerte ist möglich, wenn die Referenzwerte in einer Speichereinheit einer Steuereinheit eines Prüfempfängers gespeichert sind.

Vorteilhaft ist es, wenn die Fehlermeldung optisch über eine LED-Anzeige oder über einen Fehlermeldekontakt erfolgt. Diese einfache Anzeige ermöglicht auch eine Erkennung eines Fehlers direkt am Prüfgerät ohne weitere Programmier- oder Abrufschritte.

Die Aufgabe wird ebenfalls gelöst durch ein Verfahren zur Überwachung von Hochfrequenzkabelstrecker mit abstrahlenden Hochfrequenzkabeln zur Aufrechterhaltung eines Funknetzes auf zumindest teilweise Unterbrechung oder Dämpfungsveränderung, wobei von einem Prüfsender ein Prüfsignal mit einer vorgegebenen Prüfsendefrequenz und Prüfsendefeldstärke in die Hochfrequenzkabelstrecke eingespeist wird und durch einen Prüfempfänger ausgelesen wird, insbesondere unter Verwendung einer Vorrichtung nach einem der Ansprüche 1 bis 18, wobei der Prüfsender an einem und der Prüfempfänger an dem anderen Ende der zu vermessenden Kabellänge der Hochfrequenzkabelstrecke beabstandet in Durchleitungsanordnung an die Hochfrequenzkabelstrecke angekoppelt werden, und die Prüfempfangsdaten des von dem Prüfempfänger empfangenen Prüfsignals, insbesondere die Prüfempfangsfeldstärke, mit vorbestimmten Referenzwerten verglichen werden, wobei nach Maßgabe eines Vergleichs des Prüfsignals mit einem oder mehreren Referenzwerten ein Kabelfehler bzw. Fehlerfreiheit der Hochfrequenzkabelstrecke detektiert werden.

Weitere Merkmale und Vorteile der Erfindung ergeben sich aus den Ansprüchen und der nachstehenden Beschreibung, in der Ausführungsbeispiele des Gegenstands der Erfindung in Verbindung mit der Zeichnung näher erläutert sind. Es zeigen:
- Fig.1: ein Blockschaltbild eines Moduls mit einer erfindungsgemäßen Vorrichtung,
- Fig.2: eine Prinzipschaltung mit Vorrichtungen zur Überwachung und
- Fig.3: ein Ablaufschema zum Verfahren zur Überwachung.

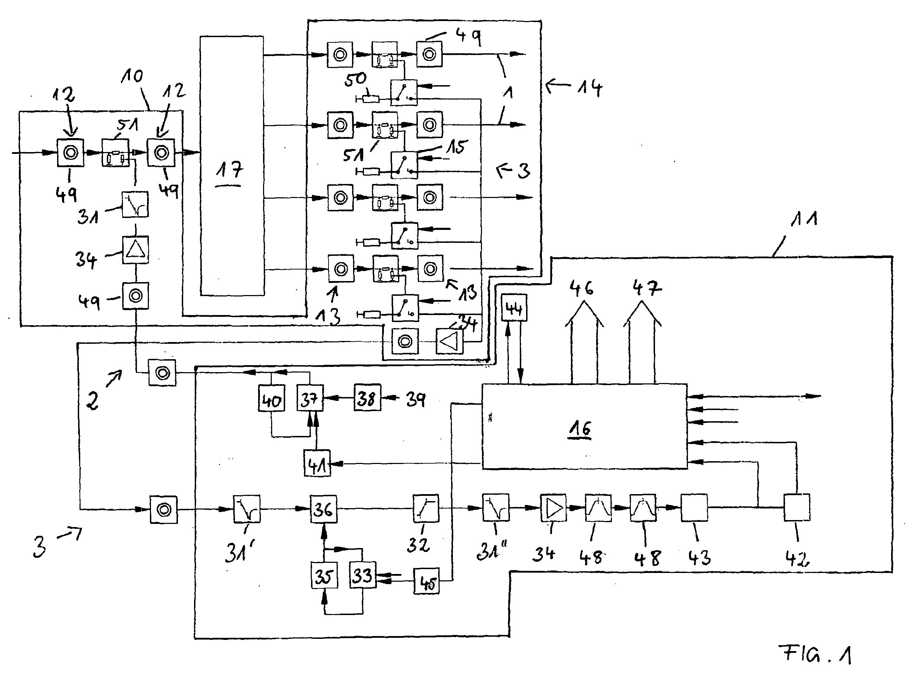

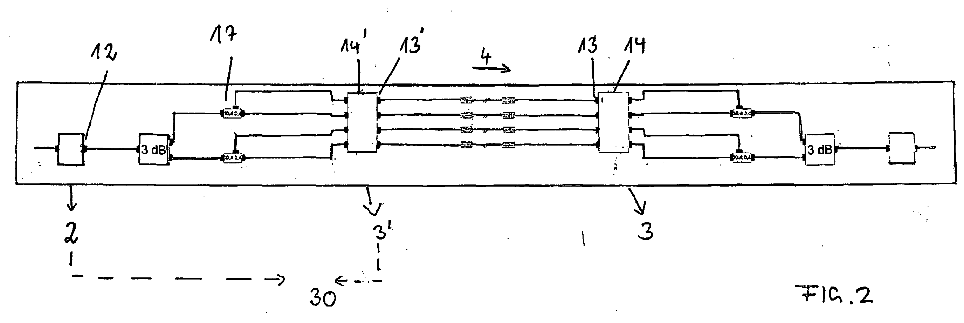

Fig. 1 zeigt ein Blockschaltbild eines Prüfmoduls 30 mit einer erfindungsgemäßen Vorrichtung zur Überwachung einer Hochfrequenzkabelstrecke 1. Das Prüfmodul 30 umfasst dabei jeweils einen Prüfsender 2 und einen Prüfempfänger 3', die zwei unterschiedlichen Vorrichtungen zur Überwachung zugeordnet sind, d.h. mit jeweils einem anderen Prüfsender 2' (nicht dargestellt) und Prüfempfänger 3 zweier anderer Prüfmodule korrespondieren, beispielsweise indem die Prüfmodule hintereinander mit jeweils zwischen zwei Prüfmodulen angeordneten Hochfrequenzkabelstrecken 1 angeordnet sind, wie beispielhaft in Fig.2 gezeigt.

Das dargestellte Prüfmodul 30 weist zwei miteinander verbundene Circuit Boards 10,11 auf. In einem ersten Matrix Circuit Board 10 befinden sich Kabelkontakte 12 zum Einspeisen und Kabelkontakte 13 zum Empfangen von Prüfsignalen. Die Kabelkontakte sind beispielsweise Koaxialkabelkontakte 49.

Das Einspeisen des Prüfssignals erfolgt beispielsweise vor einem Splitter 17, der die Prüfsignale zum Leiten auf die einzelnen Hochfrequenzkabelstrecken 1 vervielfältigt, hier also auf vier Hochfrequenzkabelstrecken 1 verteilt. Dies ist vorteilhaft für eine Anordnung des Prüfmoduls 30 in einem sich doppelröhrigem Tunnelsystem mit jeweils zwei Hochfrequenzkabelstrecken 1. Es können aber auch mehr oder weniger Hochfrequenzkabelstrecken 1 vorgesehen sein.

Die Kabelkontakte 13 werden zum Empfangen vorzugsweise so über eine Steuereinheit 16, hier auf dem zweiten Circuit Board 11, angesteuert, dass, bevorzugt mittels Relaisschalter 15, immer nur eine Hochfrequenzkabelstrecke 1 zugleich an den Prüfempfänger 3 angeschlossen ist und die hierdurch empfangenen Prüfsignale einzeln ausgewertet werden können. Die übrigen Hochfrequenzkabelstrecken 1 sind dabei zur Verhinderung von Störungen über Widerstände 51, 51 hoch entkoppelt.

In einer Ausführungsform erfolgt das Aussenden eines Prüfsignals kontinuierlich mit einer ausgewählt eingestellten Prüffrequenz aus einem Prüffrequenzbereich. Vorzugsweise wird ein Sendesignal im 40 MHz - 71 MHz, weiter vorzugsweise im Bereich 47 MHz bis 68 MHz Prüffrequenzbereich ausgewählt, mit einem Frequenzabstand von 1 MHz je Prüfsender 2 eines Prüfmoduls 30. Es können somit bis zu 32 unterscheidlich eingestellte Prüfsender 2 im gleichen Empfangsbereich verwendet werden, d.h. es sind 32 Kanäle einstellbar.

Das Prüfsignal wird zum Senden über die am Prüfmodul 30 integrierte Koppelmatrix 14 auf die Hochfrequenzkabelstrecken 1 eingespeist. Ein anderes Prüfmodul 30' sitzt am Hochfrequenzkabelstreckenende und prüft das ankommende Prüfsignal über einen der beispielsweise vier Leitungseingänge der Koppelmatrix 14 auf den ankommenden Feldstärkewert und vergleicht diesen mit den programmierten Daten in der Steuereinheit 15 des Prüfmoduls. Liegt der Wert innerhalb des Mindestwert und/oder Maximalwertbereichs ist die durchlaufene Kabelstrecke ok.

Das weitere Verarbeiten des empfangenen Signals erfolgt zunächst durch ein Leiten über einen Tiefpass 31, der vorzugsweise einen Prüfsignalfrequenzbereich (71 - 80 MHz) umfasst. Anschließend wird überprüft, ob es sich um die vorher eingestellte Prüffrequenz handelt. Im folgenden wird durch die Steuereinheit 16 durch einen Vergleich festgestellt, ob die Feldstärke des Prüfsignals in einem vorbestimmten Referenzfeldstärkenbereich, vorzugsweise zwischen einem Mindestwert 20 und einem Maximalwert 21 liegt. Es kann eine Programmierung von mehreren, beispielsweise bis zu acht Befehlsabfragen, individuell nach Leitungseingang, Kanal, Mindest-/Maximalwert vorgenommen werden. Das Prüfmodul ist programmierbar über Terminalsoftware. Eine Ausgabe einer Störmeldung kann optisch über LED-Anzeige am Prüfmodul oder durch Störmeldekontakt erfolgen.

In einer anderen Ausführungsform senden alle Prüfsender 2 Prüfsignale nach dem Zufallsprinzip mit einer modulierten ID-Kennung auf einer vorbestimmten Prüffrequenz, vorzugsweise der ISM-Frequenz 40,68 MHz. Hierzu wird zunächst überprüft, ob durch das jeweilige Prüfmodul 30 kein Prüfempfangssignal derselben Prüffrequenz eines anderen Prüfsenders 2' durch den Prüfempfänger 3 registriert wird. Die Überlagerung zweier Signale aus unterschiedlichen Sendern könnte sonst zu einer Störung führen. Ein Signal derselben Frequenz wird durch die Steuereinheit 16 und damit den Prüfsender 2 nur ausgesendet, wenn zu derselben Zeit kein Signal derselben Frequenz durch den Prüfempfänger 3 registriert und in der Steuereinheit 16 ausgewertet wird.

Das daraufhin nach dem Zufallsprinzip ausgesandte Prüfsignal wird über die am Prüfmodul 30 integrierte Koppelmatrix 14 auf die Hochfrequenzkabelstrecken 1 eingespeist. Ein anderes Prüfmodul 30' am Streckenende empfängt und prüft das ankommende Prüfsignal über einen der vier Kabelkontakte bzw. Leitungseingänge der Koppelmatrix 14 auf die ID-Kennung. Stimmt die ID-Kennung mit einem vorbestimmten gespeicherten Referenz-ID-Wert in der Befehlskommandozeile der Steuereinheit 16 überein, wird das ankommende Signal, insbesondere das Feldstärkesignal, mit den vorbestimmten, programmierten Daten, insbesondere Mindestwert 20 und/oder Maximalwert 21, im Prüfmodul verglichen. Vorzugsweise sind bis zu 255 ID-Kennungen einstellbar und somit zu 255 Prüfsender im gleichen Prüffrequenzempfangsbereich verwendbar.

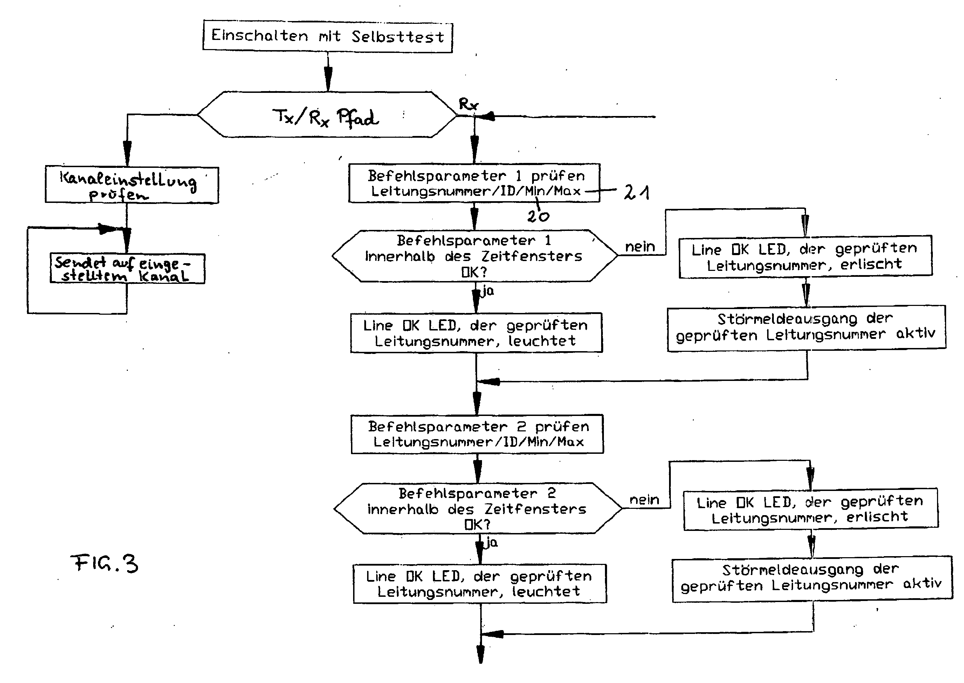

Eine Programmierung von mehreren Befehlsabfragen ist möglich, insbesondere bis zu acht Befehlsabfragen, individuell nach Leitungseingang, ID-Kennung, Mindest-/Maximalwert, wie in Fig. 3 dargestellt. Liegt der Wert, insbesondere Feldstärkewert, innerhalb des Mindestwert-Maximalwertbereichs, ist die gemessene Hochfrequenzkabelstrecke 1 in Ordnung und es wird keine Störmeldung ausgegeben. Eine Ausgabe einer Störmeldung kann optisch über LED-Anzeige am Prüfmodul oder durch Störmeldekontakt erfolgen. Das Prüfmodul ist programmierbar über Terminalsoftware.

Das Senden geschieht im einzelnen beispielsweise, wie in Fig. 1 dargestellt, durch die Übermittlung eines durch einen Zweitonencoder (DTMF ENC) 41 erzeugten Tonwahlsignals auf der festen Frequenz 40,68 MHz, das mit einer durch einen Jumper 39 erzeugten ID-Kennung versehen ist, und anschließend amplitudenmoduliert mit einem Amplitudenmodulator 37 und operationsverstärkt durch einen Operationsverstärker 34 durch einen Tiefpass 31 auf die Hochfrequenzkablestrecke 1 eingespeist wird. Anschließend wird das Prüfsignal durch einen Splitter 17 auf vorzugsweise mehrere, in diesem Beispiel vier Hochfrequenzkablestrecken 1 verteilt.

Das von einer Hochfrequenzkabelstrecke 1 abgegriffene, empfangene Prüfsignal wird mittels eines Operationsverstärkers 34 verstärkt, und durch einen Tiefpass 31' geleitet. Anschließend wird das Prüfsignal in einem Frequenzmischer 36 eingegeben, in den auch ein Frequenzsignal gespeist wird, dass von der Steuereinheit 16 über einen programmierbaren Interrupt Controller 45 erzeugt und durch einen Kreis aus einem phasengesteuerten Oszillator (PLL) 33 und einem spannungsgesteuerten Oszillator (RF VCO T-Tune) 35 geleitet wird. Anschließend wird das von dem Frequenzmischer 36 ausgegebene Signal über einen Hochpass 32, einen weiteren Tiefpass 31", einen Operationsverstärker 34, zwei Bandpässe 48, einen Logarithmierer 43 sowie durch einen Zweitondecoder 42 zur Umwandlung des Tonwahlsignals in die Steuereinheit 16 geleitet.

Das Circuit Board 11 mit der Steuereinheit 16 weist weiterhin von der Steuereeinheit 16 ausgehende Relais auf, ein Matrixrelais 46 und ein Signalrelais 47, durch das Anzeige LED für die optische Ausgabe der Fehlermeldungen geschieht. Zur Sicherstellung der Funktion der Steuereinheit 16 wird diese durch eine Zeitüberwachungsschaltung kontrolliert.

Fig. 2 zeigt eine Prinzipschaltung mit Vorrichtungen zur Überwachung. Jeweils ein Prüfsender 2 und ein Prüfempfänger 3 sind über einen Kabelkontakt 12 zum Senden und einen Kabelkontakt 13 zum Empfangen, hier beispielhaft eine vierfache Koppelmatrix 14, an die Hochfrequenzkabel 1 gekoppelt und senden bzw. empfangen die Prüfsignale. Die Prüfsignale des Prüfsenders 2 werden dazu über mehrere Splitter 17 auf mehrere Hochfrequenzkabelstrecken 1, hier beispielhaft vier Hochfrequenzkabelstrecken 1, verteilt und von dem Prüfempfänger 3 in einer beispielhaft eingezeichneten Durchleitungsrichtung 4 empfangen.

Fig. 3 zeigt ein Ablaufschema zum Verfahren zur Überwachung. Das Einschalten erfolgt beispielsweise zunächst mit einem Selbsttest. Je ein Pfad führt zum Senden (Tx) und einer zum Empfangen (Rx) eines Prüfsignals. Zum Senden wird die Kanaleinstellung überprüft und dann auf dem eingestellten Kanal gesendet.

Zum Empfangen wird zunächst ein Befehlsparameter überprüft. Hierzu wird die Leitungsnummer der Hochfrequenzkabelstrecke 1 und der Kanal der Frequenz abgeprüft. Anschließend erfolgt eine Überprüfung des Mindestwert/Maximalwertbereichs. Wenn der Befehlsparameter in Ordnung ist, wird eine Leuchtanzeige an der entsprechenden Position ausgegeben. Bei einem Fehler erlischt das LED der geprüften Leitungsnummer und eine Störmeldung der geprüften Leitungsnummer wird aktiviert. Eine Programmierung von mehreren Befehlsabfragen ist möglich, insbesondere bis zu acht Befehlsabfragen, individuell nach Leitungseingang, ID-Kennung, Mindest-/Maximalwert.

### BEZUGSZEICHENLISTE

- 1: Hochfrequenzkabeistrecke
- 2: Prüfsender
- 3: Prüfempfänger
- 4: Durchleitungsanordnung
- 10: Circiut Board (Matrix)
- 11: Circuit Board (Cable Checker)
- 12: Kabelkontakt zum Senden, Einspeisen
- 13: Kabelkontakt zum Empfangen
- 14: Koppelmatrix
- 15: Relaisschalter (-26dB)
- 16: Steuereinheit
- 17: Splitter (Power Splitter)
- 20: Mindestwert
- 21: Maximalwert
- 30: Prüfmodul
- 31: Tiefpass (71 MHz - 80MHz - 60dB)
- 31': Tiefpass (41 MHz - 80MHz)
- 31": Tiefpass (80MHz - 150Hz)
- 32: Hochpass (80MHz - 100MHz)
- 33: Phasengesteuerter Oszillator (PLL)
- 34: Operationsverstärker
- 35: Spannungsgesteuerter Oszillator (RF VCO U-Tune)
- 36: Frequenzmischer (IF, LO, RF)
- 37: Amplitudenmodulator
- 38: OSC (40,68MHz)
- 39: Jumper (5 Bit)
- 40: Deterministisches System (RF DET U-Power)
- 41: Zweitonencoder (DTMF ENC)
- 42: Zweitondecoder (DTMF DEC)
- 43: Logarithmierer
- 44: Zeitüberwachungsschaltung (Watch DOG, NE 555)
- 45: Programmierbarer Interupt Controller (PIC)
- 46: Matrixrelais
- 47: Signalrelais
- 48: Bandpass (BW 100kHz, Mitte 150MHz)
- 49: Koaxialkabelanschluss (SMA 50)
- 50: Widerstand (500hm)
- 51: Widerstandsschaltung (0,75dB)

## Patentansprüche

1. Vorrichtung zur Überwachung von Hochfrequenzkabelstrecken (1) mit abstrahlenden Hochfreqenzkabeln zur Aufrechterhaltung eines Funknetzes auf zumindest teilweise Unterbrechung oder Dämpfungsveränderung, mit einem Prüfsender (2) und einem Prüfempfänger (3), wobei von dem Prüfsender (2) ein Prüfsignal mit einer vorgegebenen Prüfsendefrequenz und Prüfsendefeldstärke in die Hochfrequenzkabelstrecke (1) einzuspeisen ist und durch den Prüfempfänger (3) auszulesen ist, und der Prüfsender (2) an einem und der Prüfempfänger (3) an dem anderen Ende der zu vermessenden Kabellänge der Hochfrequenzkabelstrecke (1) beabstandet in Durchleitungsanordnung (4) an die Hochfrequenzkabelstrecke (1) anzukoppeln sind, und die Prüfempfangsdaten des von dem Prüfempfänger (3) empfangenen Prüfsignals, insbesondere die Prüfempfangsfeldstärke, mit vorbestimmten Referenzwerten zu vergleichen sind, wobei nach Maßgabe eines Vergleichs des Prüfsignals mit einem oder mehreren Referenzwerten ein Kabelfehler bzw. Fehlerfreiheit der Hochfrequenzkabelstrecke (1) detektierbar ist.

2. Vorrichtung nach Anspruch 1, **dadurch gekennzeichnet, dass** ein Fehler zu registrieren ist, wenn die Prüfempfangsfeldstärke einen vorgegebenen Mindestwert (20) unterschreitet.

3. Vorrichtung nach Anspruch 1 oder 2, **dadurch gekennzeichnet, dass** ein Fehler zu registrieren ist, wenn die Prüfempfangsfeldstärke einen Maximalwert (21) überschreitet.

4. Vorrichtung nach einem oder mehreren der Ansprüche 1 bis 3, **dadurch gekennzeichnet, dass** der Empfang/das Senden des Prüfsignals über jeweils einen an die Hochfrequenzkabelstrecke (1) anzukoppelnden Kabelkontakt (13) vorzunehmen ist.

5. Vorrichtung nach einem oder mehreren der Ansprüche 1 bis 4, **dadurch gekennzeichnet, dass** die Prüffrequenz im Frequenzbereich zwischen etwa 1 MHz bis 1 GHz liegt.

6. Vorrichtung nach einem oder mehreren der Ansprüche 1 bis 5, **dadurch gekennzeichnet, dass** die Prüffrequenz im Frequenzbereich zwischen 40 MHz bis 71 MHz liegt.

7. Vorrichtung nach einem oder mehreren der Ansprüche 1 bis 6, **dadurch gekennzeichnet, dass** mehrere Prüfsender (2) /Prüfempfänger (3) parallel zu betreiben sind und jeweils auf einem anderen Frequenzbereich senden/empfangen.

8. Vorrichtung nach einem der Ansprüche 1 bis 7, **dadurch gekennzeichnet, dass** Koppelmatrizen (14) zum Einspeisen und/oder Empfangen des Prüfsignals zur Überwachung von mehreren, insbesondere vier, Hochfrequenzkabelstrecken (1) gleichzeitig angeordnet sind.

9. Vorrichtung nach einem der Ansprüche 1 bis 8, **dadurch gekennzeichnet, dass** Kabelkontakte (13) der Koppelmatrizen (14) zum Empfangen über eine Steuereinheit anzusteuern sind, so dass, bevorzugt mittels Relais (15), nur eine der Hochfrequenzkabelstrecken (1) zur selben Zeit an den Prüfempfänger (3) angeschlossen ist und die hierdurch in den Prüfempfänger (3) eingeleiteten Prüfsignale auszuwerten sind.

10. Vorrichtung nach einem der Ansprüche 1 bis 9, **dadurch gekennzeichnet, dass** ein Prüfsender (2) kontinuierlich Prüfssignale mit einer vorbestimmten Prüffrequenz aussendet.

11. Vorrichtung nach einem der Ansprüche 1 bis 10, **dadurch gekennzeichnet, dass** bis zu 32 Prüfsender (2) in einem Prüffrequenzbereich mit jeweils einem Prüffrequenzabstand von etwa 1 MHz eingerichtet sind.

12. Vorrichtung nach einem oder mehreren der Ansprüche 1 bis 9, **dadurch gekennzeichnet, dass** der Prüfsender (2) Prüfsignale mit einer Prüffrequenz von etwa 40 MHz - 41 MHz, vorzugsweise 40,68 MHz, sendet.

13. Vorrichtung nach einem oder mehreren der Ansprüche 1 bis 9 und 12, **dadurch gekennzeichnet, dass** Prüfsignale zu zufälligen Zeitpunkten auszusenden sind, vorzugsweise sofern kein weiteres Prüfsignal aus einem anderen Prüfsender (2) mit derselben Prüffrequenz in demselben Hochfrequenzkabelbereich zu empfangen ist.

14. Vorrichtung nach einem der Ansprüche 1 bis 9 und/oder 12 und 13, **dadurch gekennzeichnet, dass** ein Prüfsignal eine modulierte ID-Kennung aufweist, wobei beim Prüfempfänger (3) zunächst die ID-Kennung des Prüfsignals mit gespeicherten ID-Kennungen zu vergleichen ist und bei Übereinstimmung der ID-Kennungen ein Vergleich der Feldstärkewerte erfolgt.

15. Vorrichtung nach einem oder mehreren der Ansprüche 1 bis 9 und/oder 12 bis 14, **dadurch gekennzeichnet, dass** bis zu 255 Prüfsender (2), die jeweils einer anderen ID-Kennung entsprechen, im gleichen Prüffrequenzbereich zu verwenden sind.

16. Vorrichtung nach einem oder mehreren der Ansprüche 1 bis **14, dadurch gekennzeichnet, dass** ein Prüfsender (2) und ein Prüfempfänger (3) jeweils in einem Prüfmodul (30) integriert sind.

17. Vorrichtung nach einem oder mehreren der Ansprüche 1 bis 15, **dadurch gekennzeichnet, dass** die Referenzwerte in einer Speichereinheit einer Steuereinheit (16) eines Prüfempfängers (3) gespeichert sind.

18. Vorrichtung nach einem oder mehreren der Ansprüche 1 bis 16, **dadurch gekennzeichnet, dass** die Fehlermeldung optisch über eine LED-Anzeige oder über einen Fehlermeldekontakt erfolgt.

19. Verfahren zur Überwachung von Hochfrequenzkabelstrecken (1) mit abstrahlenden Hochfreqenzkabeln zur Aufrechterhaltung eines Funknetzes auf zumindest teilweise Unterbrechung oder Dämpfungsveränderung, wobei von einem Prüfsender (2) ein Prüfsignal mit einer vorgegebenen Prüfsendefrequenz und Prüfsendefeldstärke in die Hochfrequenzkabelstrecke (1) eingespeist wird und durch einen Prüfempfänger (3) ausgelesen wird, insbesondere unter Verwendung einer Vorrichtung nach einem der Ansprüche 1 bis 18, wobei der Prüfsender (2) an einem und der Prüfempfänger (3) an dem anderen Ende der zu vermessenden Kabellänge der Hochfrequenzkabelstrecke (1) beabstandet in Durchleitungsanordnung an die Hochfrequenzkabelstrecke (1) angekoppelt werden, und die Prüfempfangsdaten des von dem Prüfempfänger (3) empfangenen Prüfsignals, insbesondere die Prüfempfangsfeldstärke, mit vorbestimmten Referenzwerten verglichen werden, wobei nach Maßgabe eines Vergleichs des Prüfsignals mit einem oder mehreren Referenzwerten ein Kabelfehler bzw. Fehlerfreiheit der Hochfrequenzkabelstrecke (1) detektiert werden.

## Claims

1. Device for monitoring of high frequency cable sections (1) with radiating high frequency cables for the maintenance of a radio net in relation to at least partially interruption or attenuation change, with an emitter for testing (2) and a receiver for testing (3), with a testing signal with a given testing frequency and a given strength of the field of the emitted testing signal emitted into the high frequency cable section (1) by the emitter for testing (2) and read by the receiver for testing (3), and with the emitter for testing (2) connected at one end and the receiver for testing (3) connected at the other end of the cable part of the frequency cable section (1) to be measured with a separation distance to each other in the configuration of leading through (4), and with the received data of the testing signal, especially the strength of the field of the emitted testing signal, received by the receiver for testing (3), comparaed to given reference values, with according to the requirement of a comparison of the testing signal with one or more reference values a failure respectively correctness of the section of the high frequency cable (1) is detectable.

2. Device according to claim 1, **characterized in that** an error is to be registered, if the strength of the field of the emitted testing signal falls below a given minimal value (20).

3. Device according to one of claims 1 to 2, **characterized in that** an error is to be registered, if the strength of the field of the emitted testing signal exceeds a maximum value (21).

4. Device according to one or several of claims 1 to 2, **characterized in that** the receipt/the sending of the testing signal is conducted respectively by a cable contact coupled to the high frequency cable section (7.).

5. Device according to one or several of claims 1 to 4, **characterized in that** the inspection frequency lies in the frequency range between approximately 1 MHz to 1GHz.

6. Device according to one or several of claims 1 to 5, **characterized in that** the inspection frequency lies in the frequency range between 40 MHz to 71 MHz.

7. Device according to one or several of claims 1 to 6, **characterized in that** several emitters for testing (2) / receivers for testing (3) are to be operated parallel and send/receive on a different frequency range in each case.

8. Device according to one or several of claims 1 to 7, **characterized in that** coupling matrices (14) are arranged for feeding and/or receiving the testing signal for the monitoring of several, in particular four, high frequency cable sections (1) at the same time.

9. Device according to one or several of claims 1 to 8, **characterized in that** cable contacts (13) of the coupling matrices (14) are to be headed for receiving over a control unit, so that, preferably by means of relays (15), only one of the high frequency cable sections (1) is attached to the testing receiver (3) at the same time and the test signals introduced (3) thereby into the testing receiver are to be evaluated.

10. Device according to one or several of claims 1 to 9, **characterized in that** an emitter for testing (2) sends test signals with a pre-determined inspection frequency continuously.

11. Device according to one or several of claims 1 to 9, **characterized in that** up to 32 testing emitters (2) are arranged in an inspection frequency range with an interval of frequencies for testing of approximately 1 MHz in each case.

12. Device according to one or several of claims 1 to 9, **characterized in that** the testing emitter (2) sends testing signals with a testing frequency of approximately 40 MHz to 41 MHz, preferably 40.68 MHz.

13. Device according to one or several of claims 1 to 9 and 12, **characterized in that** testing signals are to be sent at coincidental times, preferably if no further testing signal of another testing emitter (2) it is to be received with the same testing frequency in the same high frequency cable region.

14. Device according to one or several of claims 1 to 9, **characterized in that** a testing signal exhibits a modulated ID identification, while the first ID identification of the testing signal is to be compared by the testing receiver (3) with stored ID identifications and in the case of congruence of the ID identifications a comparison of the field strength values takes place.

15. Device according to one or several of claims 1 to 9, **characterized in that** up to 255 testing emitters (2), each of which corresponds to a different ID identification, are to be used in the same testing frequency region.

16. Device according to one or several of claims 1 to 9, **characterized in that** a testing emitter (2) and a testing receiver (3) are integrated in a check module (30) respectively.

17. Device according to one or several of claims 1 to 9, **characterized in that** the reference values are stored in a memory unit of a control unit (16) of a testing receiver (3) .

18. Device according to one or several of claims 1 to 9, **characterized in that** the error message is shown optically by means of a LED display or by a contact showing errors.

19. Procedure for monitoring of high frequency cable sections (1) with radiating high frequency cables for the maintenance of a radio net in relation to at least partially interruption or attenuation change, with a testing signal with a given testing frequency and a given strength of the field of the emitted testing signal emitted into the high frequency cable section (1) by the emitter for testing (2) and read by the receiver for testing (3), especially with the use of a device according to claims 1 to 18, with the emitter for testing (2) connected at one end and the receiver for testing (3) connected at the other end of the cable part of the frequency cable section (1) to be measured with a separation distance to each other in the configuration of leading through (4), and with the received data of the testing signal, especially the strength of the field of the emitted testing signal, received by the receiver for testing (3), compared to given reference values, while according to the requirement of a comparison of the testing signal with one or more reference values a failure respectively correctness of the section of the high frequency cable (1) will be detected.

## Revendications

1. Dispositif visant la surveillance des trajet de câble de haute fréquence (1) avec des câbles de haute fréquence rayonnant visant le maintien d'un réseau radio visant au moins en partie des interruption ou une modification d'absorption, avec un émetteur d'essai (2) et un récepteur d'essai (3), et de l'émetteur d'essai (2) un signal d'essai avec un fréquence émise d'essai et un intensité du champ d'essai prédéterminée est introduir dans la pièces de câble de haute fréquence (1) et est lire de le récepteur d'essai (3), et le émetteur d'essai (2) est accrocher à un fin et le récepteur d'essai (3) à l'autre fin de le trajet de câble arpenter de la trajet de câble de haute fréquence (1) avec espacement dans an ordre de la conduction (4) et la trajet de câble de haute fréquence (1), et les dates du signal d'essai receptionner du récepteur d'essai (3), en particulier l'intensité du champ recepteur d'essai, sont comparer avec des valeurs references fixer, au prorata d'une comparaison du signal d'essai avec un ou plusieurs valeurs references un cas d'erreur de cable respectivement exempt d'erreur de trajet de câble de haute fréquence (1) est détecter.

2. Dispositif marqué selon la revendication 1, **charactérisé en ce qu**'il faut enregistrer une erreur , si le l'intensité du champ recepteur d'essai descend au-dessous d'un valeur minimale (20) prédéterminée.

3. Dispositif selon l'un des revendications 1 ou 2, **charactérisé en ce qu'**une erreur est enregistrer, si l'intensité du champ recepteur d'essai dépasse une valeur maximale (21).

4. Dispositif selon l'un des revendications 1 à 3, **charactérisé en ce qu'**il faut proceder le réception/le émettre du signal d'essai sur respectivement un dispositive de contact de cable (13) accrocher à la trajet de câble de haute fréquence (1).

5. Dispositif selon l'un des revendications 1 à 4, **charactérisé en ce que** la fréquence d'essai est situe dans la gamme de fréquence d'essai entre environ 1 MHz à 1GHz.

6. Dispositif selon l'un des revendications 1 à 5, **charactérisé en ce que** la fréquence d'essai est situe dans la gamme de fréquence d'essai entre environ 40 MHz à 71 MHz.

7. Dispositif selon l'un des revendications 1 à 6, **charactérisé en ce que** un plusieurs émetteurs d'essai (2)/récepteurs d'essai (3) sont exercer parallèlement et émettre et receptionner sur une autre gamme de fréquence respectivement.

8. Dispositif selon l'un des revendications 1 à 7, **charactérisé en ce que** matrizes des accrocheres (14) pour émettre et/ou receptionner de la signale d'essai sont disposés pour superviser plusieurs, en particulier quatre, des trajet de câble de haute fréquence (1) en, même temps.

9. Dispositif selon l'un des revendications 1 à 8, **charactérisé en ce qu**'il faut dispositives de contact de câble (13) des matrizes des accrocheres (14) sont diriger pour receptionner par une entité diriger vers les contacts par câble (13) des matrices, en sorte que, en particulier par une relais (15), seulement une des des trajet de câble de haute fréquence (1) est connecté à le recepteur d'essai en même temps et les signaux d'essai introduir a la recepteur d'essai (3) sont évalués.

10. Dispositif selon l'un des revendications 1 à 9, **charac**t**érisé en ce qu**'un emitter d'essai (2) envoie de façon continue des signaux d'essai avec une fréquence d'essai prédéterminée.

11. Dispositif selon l'un des revendications 1 à 10, **charactérisé en ce que** jusqu'à 32 émetteurs d'essai (2) dans un secteur de fréquence d'essai avec respectivement un distance de fréquence d'essai d'environ 1 MHz sont ajuster.

12. Dispositif selon l'un des revendications 1 à 11, **charactéris en ce que** fait que l'émetteur d'essai (2) emitter de signaux d'essai avec une fréquence d'essai d'environ 40 MHz à - 41 MHz, de préférence 40,68 MHz.

13. Dispositif selon l'un des revendications 1 à 9 et 12, **charactérisé en ce qu**'il faut émitter des signaux d'essai à des moments fortuits, de préférence pour autant qu'aucun autre signal d'essai d'un autre émetteur d'essai (2) avec la meme fréquence d'essai dans le même trajet de câble de haute fréquence ne puisse être reçu.

14. Dispositif selon l'un des revendications 1 à 9 et/ou 12 et 13, **charactérisé en ce qu**'un signal d'essai presente un ID-signalisation modulée, et a le recepteur d'essai (3) il faut d'abord comparer le ID-signalisation du signal d'essai à des ID-signalisations stockés et lors de l'accord des ID-signalisations une comparaison des valeurs d'intensité du champ effectué.

15. Dispositif selon l'un des revendications 1 à 9 et/ou 12 à 14, **charactérisé en ce qu**'il faut utiliser jusqu'à 255 émitteurs d'essai (2) qui correspondent respectivement à un autre ID-signalisation, dans le même zone de fréquence d'essai .

16. Dispositif selon l'un des revendications 1 à 14, **charactérisé en ce qu**'un émetteur d'essai (2) et un récepteur d'essai (3) sont intégrés respectivement dans un module d'essai (30).

17. Dispositif selon l'un des revendications 1 à 15, **charactérisé en ce que** les valeurs de référence sont stockées dans une unité de mémoire d'un module de commande (16) d'un récepteur d'essai (3).

18. Dispositif selon l'un des revendications 1 à 16, **charactérisé en ce que** le message d'erreur s'effectue au niveau optique par un affichage LED ou un contact pour anonncer d'erreur.

19. procédure visant la surveillance des trajet de câble de haute fréquence (1) avec des câbles de haute fréquence rayonnant visant le maintien d'un réseau radio visant au moins en partie des interruption ou une modification d'absorption, et de l'émetteur d'essai (2) un signal d'essai avec un fréquence émise d'essai et un intensité du champ d'essai prédéterminée est introduir dans la trajets de câble de haute fréquence (1) et est lire de le récepteur d'essai (3), en particulier avec application de dispositif selon des revendications 1 à 18, le émetteur d'essai (2) est accrocher à un fin et le récepteur d'essai (3) à l'autre fin de le trajet de câble arpenter de la trajet de câble de haute fréquence (1) avec espacement dans an ordre de la conduction et la trajet de câble de haute fréquence (1), et les dates du signal d'essai receptionner du récepteur d'essai (3), en particulier l'intensité du champ recepteur d'essai, sont comparer avec des valeurs references fixer, au prorata d'une comparaison du signal d'essai avec un ou plusieurs valeurs references un cas d'erreur de câble respectivement exempt d'erreur de trajet de câble de haute fréquence (1) est détecter.
